# EUROPEAN PATENT SPECIFICATION

(11) **EP 2 732 690 B1**
(45) Date of publication and mention of the grant of the patent: **20.04.2016**
(21) Application number: 12007552.8
(22) Date of filing: 15.11.2012
(51) Int. Cl.: A01D 87/12, A01F 29/00, A01F 29/01

(54) **A bale cutter**
Ballenschneider
Appareil de découpe de balles

(43) Date of publication of application: 21.05.2014
(73) Proprietor: Cunnane, Peter, Ballyhaunis, County Mayo (IE)
(72) Inventor: Cunnane, Peter, Ballyhaunis, County Mayo (IE)
(74) Representative: Schütte, Gearoid

(56) References cited:
- WO-A1-2008/071856
- WO-A1-2010/016045
- GB-A- 2 189 770
- US-A- 4 073 532
- US-A- 5 397 208

## Description

### Introduction

This invention relates to a bale cutter for opening a wrapped bale of fodder such as silage, hay or the like.

The present invention particularly relates to a bale cutter of the type comprising a support frame, a bale support on the frame, a cutter head movably mounted on the frame for cutting through a bale mounted on the support, and a bale cover retainer mounted on the frame. Such a bale cutter is described in WO 2010/016045 and WO 2008/071856, for example. In both of these documents, the bale cover retainer comprises a pair of clamp jaws which grip an exterior of the wrapping material which covers the bale. However, the bale must be correctly aligned with the clamp jaws in order for them to grip the wrapping material correctly. In theory, the bales have a cylindrical shape with a diameter of about 1.2 metres. However, during storage there is usually some settling and distortion of the bale, so when it is mounted on the bale cutter, it may not correctly align with the clamp jaws. Further, in cold weather, the bales can freeze and in these circumstances, the jaws find it difficult, if not impossible, to grip the cover material. US 5,397,208 discloses bale handling apparatus for lifting and loading bales onto a trailer which includes grab hooks forming a bale support which penetrate and hold a bale against a loading platform.

The present invention is directed towards overcoming these problems.

### Statements of Invention

According to the invention, there is provided a bale cutter comprising:
a support frame,
a bale support on the frame,
a cutter head movably mounted on the frame for cutting through a bale mounted on the bale support, and
a bale cover retainer mounted on the frame,
characterised in that the bale cover retainer comprises at least one claw mounted on the frame with an associated actuator which is operable to move the claw between a retracted disengaged position on the frame, and an extended bale engaging position in which the claw pierces the bale cover and extends into the bale in use.

In one embodiment of the invention, the claw is arcuate and is movable through an arc between the retracted disengaged position and the extended bale engaging position.

In another embodiment, the claw extends outwardly at a front side of the frame and a tip of the claw locates adjacent the front side of the frame when in a fully extended position.

In another embodiment, the bale cover retainer comprises a plurality of spaced-apart claws.

In another embodiment, each claw is mounted on a swivel shaft which is rotatably mounted on the frame.

In a further embodiment, the actuator is a double acting ram mounted between the frame and the swivel shaft for rotation of the swivel shaft on the frame.

In another embodiment, a pair of swivel shafts are rotatably mounted spaced-apart on the frame, each pivot shaft having a number of claws thereon, a lever arm projecting radially outwardly at an inner end of each swivel shaft, the double acting ram being mounted between a pivot connector extended between outer ends of the lever arms and a pivot mount on the frame.

In another embodiment, the frame has a concave front side for reception of a bale against said arcuate front side for cutting the bale.

In a further embodiment, each claw is movable through an associated opening in the front side when moving between the retracted disengaged position and the extended bale engaging position.

In another embodiment, the cutter head is mounted by a pair of spaced-apart support arms on the frame, the cutter head extending between outer ends of the support arms, inner ends of the support arms being pivotally mounted on the frame, a double acting ram mounted on the frame at each .support arm and extending between the frame and the support arm above the pivot at the inner end of the arm, said ram being operable to push the arm downwardly from a raised position for cutting through a bale mounted on the bale support.

### Detailed Description of the Invention

The invention will be more clearly understood by the following description of some embodiments thereof, given by way of example only, with reference to the accompanying drawings, in which:
Fig. 1 is a front perspective view of a bale cutter according to the invention;
Fig. 2 is a view similar fig.1 showing the bale cutter in another position of use;
Fig. 3 is another front perspective view of the bale cutter in a further position of use;
Fig. 4 is a rear perspective view of the bale cutter;
Fig. 5 is another rear perspective view of the bale cutter, shown in another position of use;
Fig. 6 is a rear elevational view of the bale cutter;
Fig. 7 is a detail rear perspective view showing portion of the bale cutter;
Fig. 8 is a detail exploded rear perspective view of portion of the bale cutter; and
Figs. 9 to 14 are side elevational views of the bale cutter showing the bale cutter in use.

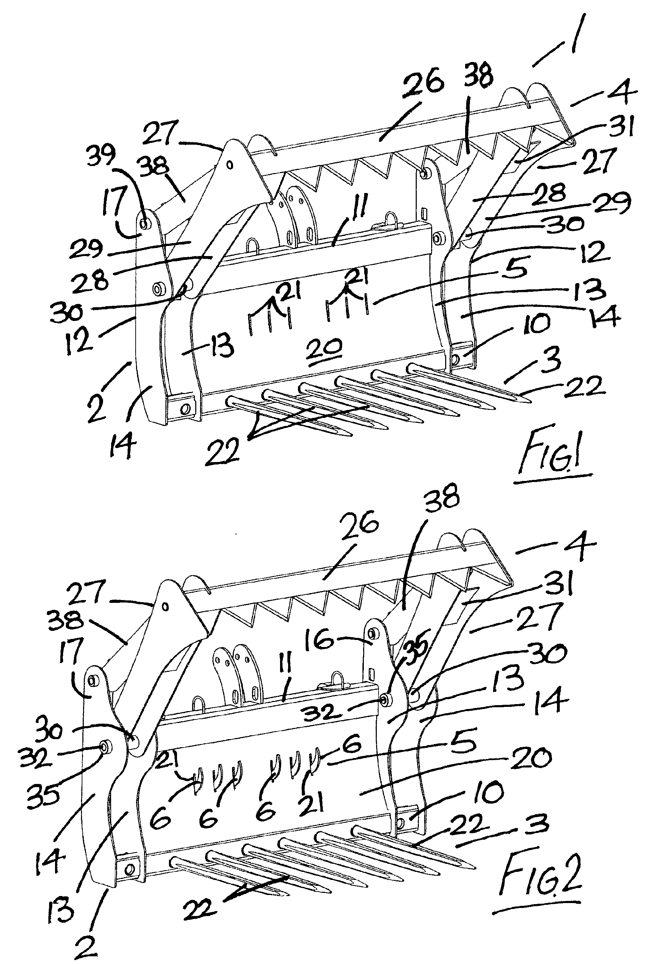

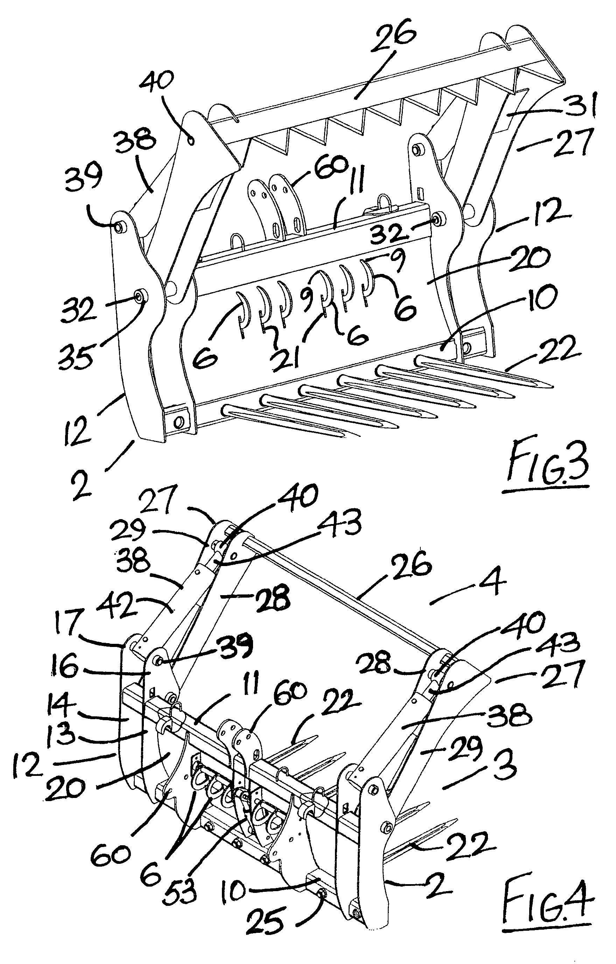

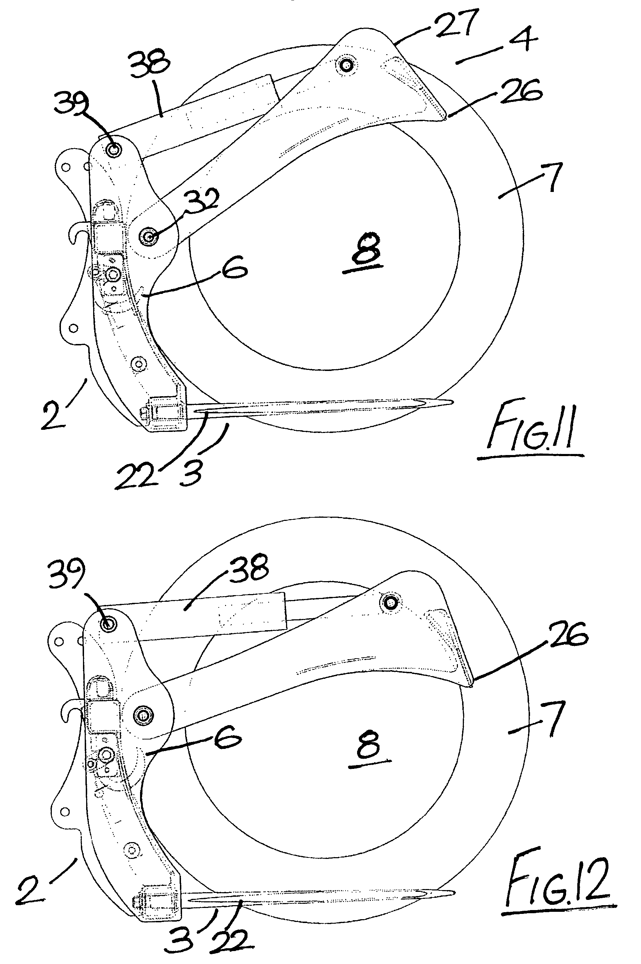

Referring to the drawings, there is illustrated a bale cutter according to the invention, indicated generally by the reference numeral 1. The bale cutter 1 comprises a rigid steel support frame 2 having a bale support 3 extending outwardly at a bottom of the frame 2 at a front of the frame 2, and a cutter 4 pivotally mounted at a top of the frame 2 for cutting through a bale mounted on the bale support 3. A bale cover retainer 5 comprising a set of claws 6 is mounted on the frame 2, these claws 6 being movable between a retracted disengaged position, as shown in Fig. 1, and an extended bale engaging position, as shown in Figs. 2 and 3, in which the claws 6 pierce a bale cover 7 of plastics and/or netting encasing a bale 8 of fodder and extend into the bale 8 mounted on the support 3 in use as shown in Figs. 11 to 14.

The frame 2 has a box-section bottom rail 10 and a box-section top rail 11 mounted spaced-apart above the bottom rail 10 and substantially parallel thereto. End uprights 12 are mounted at each end of the rails 10, 11 and extend between the bottom rail 10 and the top rail 11. Each end upright 12 comprises a pair of spaced-apart substantially parallel plates, namely, an inner plate 13 and an outer plate 14. An upper end 16, 17 of each plate 13, 14 extends upwardly beyond the top rail 11.

A concave front panel 20 is mounted between the bottom rail 10 and top rail 11 and extends between the inner plates 13 of the end uprights 12. Conveniently, this may be formed by a single piece of sheet steel to provide a durable and lightweight structure. A number of openings 21 in the front panel 20 associated with the claws 6 allow through passage of the claws 6 which are mounted behind the front panel 20.

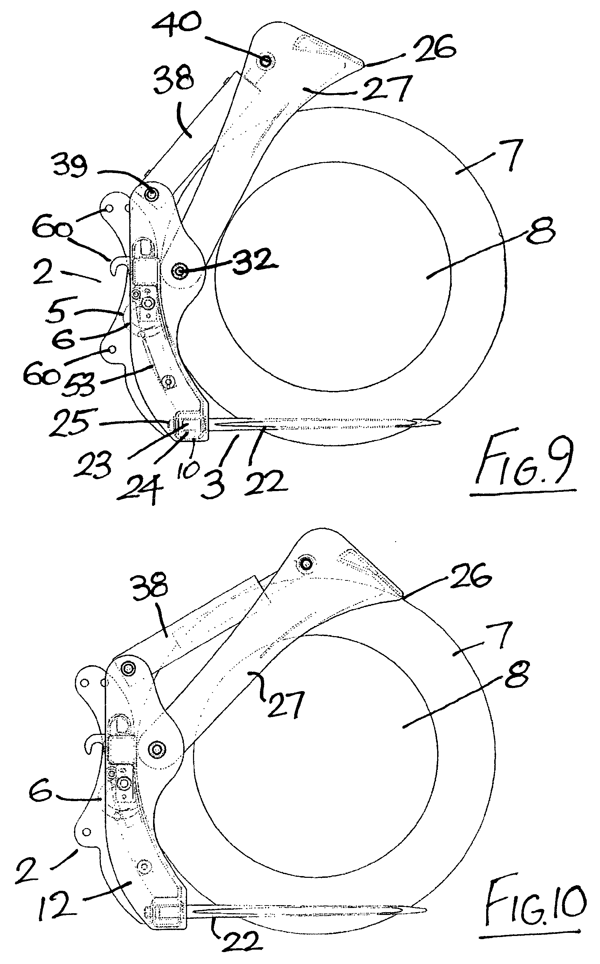

A set of spaced-apart tines 22 are mounted on and extend forwardly from the bottom rail 10. Each tine 20 is demountably secured on the bottom rail 10, having a threaded stud 23 (Fig. 9) at an inner end of the tine 22 which passes through an associated through hole 24 in the bottom rail 10 for engagement by a lock nut 25 which secures the tine 22 on the bottom rail 10.

The cutter 4 comprises a cutter head 26 mounted between a pair of support arms 27 which are pivotally mounted on the frame 2 and extend perpendicularly outwardly of the support frame 2 to support the cutter head 26 substantially parallel to the rails 10, 11 of the support frame 2. Each support arm 27 comprises a parallel pair of plates, namely an inner plate 28 and an outer plate 29 interconnected at their outer ends by the cutter head 26, at their inner ends by a tubular sleeve 30 and connected intermediate their ends by a crosspiece 31.

A pivot pin 32 passes through the tubular sleeve 30 with which it rotatably engages and extends outwardly through the inner plate 13 and outer plate 14 of the end upright 12 in front of the top rail 11, being secured thereto by nuts 35.

Cutter operating rams 38 extend between an inner pivot 39 at a top of the end upright 12 and an outer pivot 40 at an outer end of the associated support arm 27. It will be noted that each ram 38 has a cylinder 42 secured to the upright 12 by inner pivot 39 and a complementary piston rod 43 extends outwardly of the cylinder 42 to engage the outer pivot 40. Thus, for cutting a bale 8, the rams 38 push the cutter head 26 downwardly from a raised position through the bale 8. Thus, maximum ram force is delivered to the cutter head 26 during the cutting stroke, that is the pressurised oil acts on the full surface area of the piston within the cylinder 42 at the inner end of the piston rod 43.

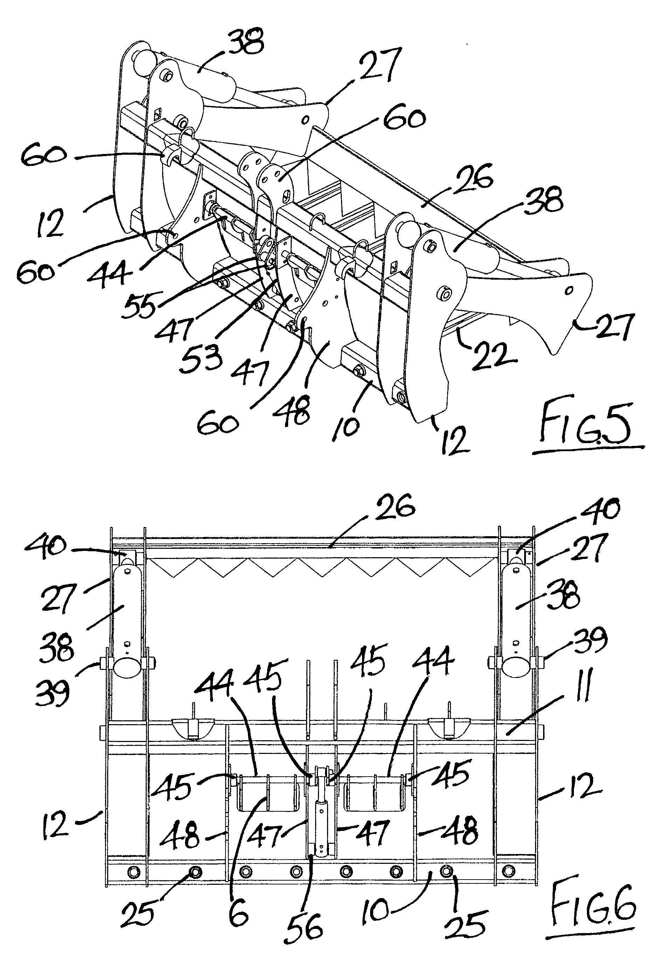

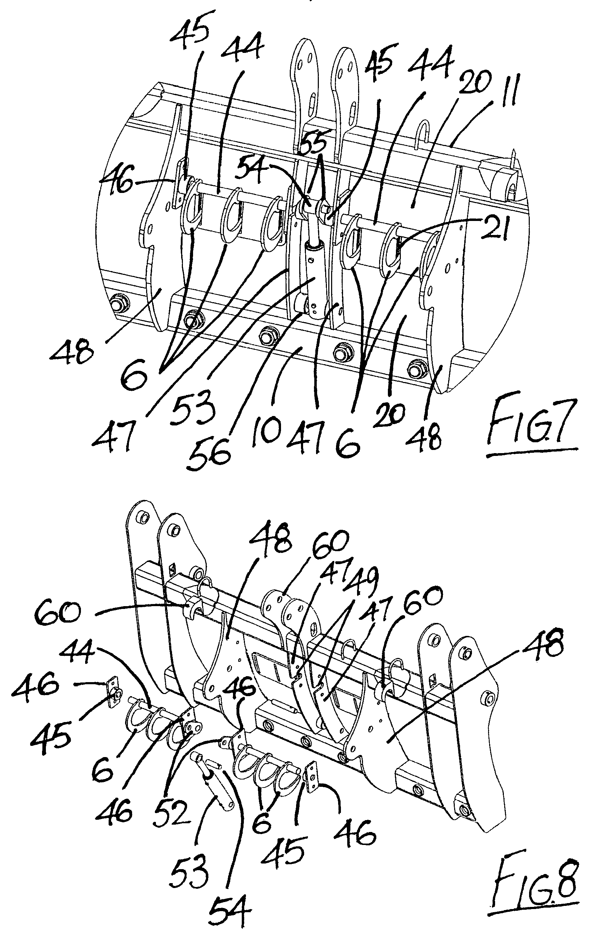

Referring in particular to Figs. 4 to 8, the bale cover retainer 5 is shown in more detail. The bale cover retainer 5 comprises a set of arcuate claws 6 mounted spaced-apart on two associated swivel shafts 44 rotatably mounted between bushings 45 secured on mounting plates 46 which are attached to upstanding support members 47, 48 of the frame 2 which extend between the bottom rail 10 and top rail 11 behind the front panel 20. Slots 49 in each of the inner support members 47 facilitate mounting the swivel shafts 44 between the support members 47, 48. The mounting plates 46 are bolted to the support members 47, 48. Lever arms 52 project radially outwardly at an inner end of each swivel shaft 44. A double acting claw actuating ram 53 is mounted between a pivot connector 54 extended between outer ends 55 of the lever arms 52 and a pivot mount 56 located between the inner support members 47 adjacent the bottom rail 10.

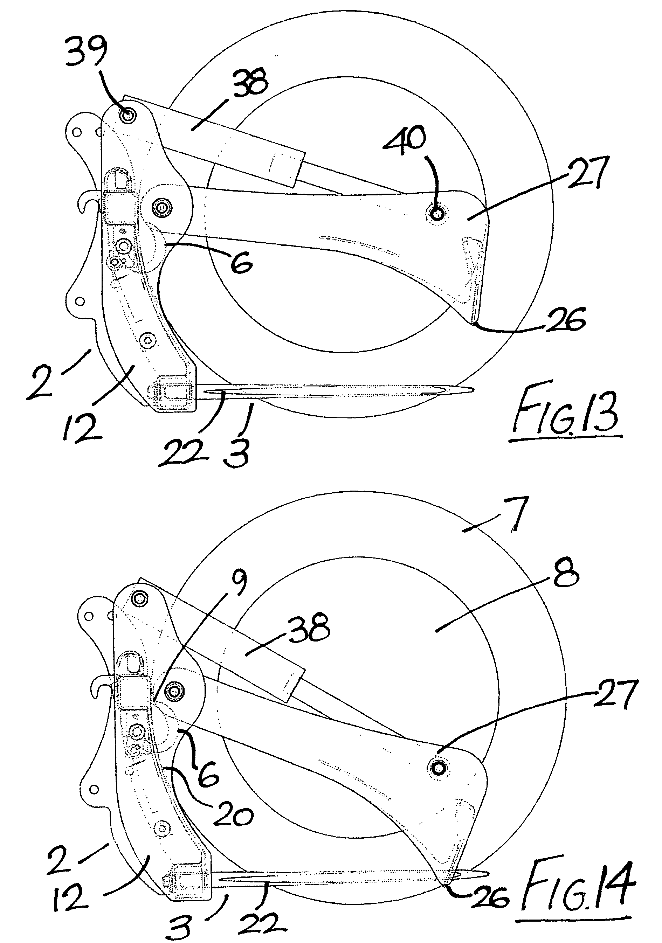

The claw actuating ram 53 is operable to rotate the swivel shafts 44 on the support frame 2 to move the claws 6 along an arcuate path between a retracted disengaged position behind the front panel 20 (Figs. 1, 4 & 9), through the complementary openings 21 in the front panel 20 (Figs. 2 & 11) and an extended bale engaging position (Figs. 3, 5 & 12-14) in which the claws 6 pierce the bale cover 7 and extend into the bale 8 to securely retain the cover 7 when the bale 8 is cut by the cutter 4 to discharge the fodder therefrom. It will be noted in particular from Fig. 3 and Fig. 14 that when in the fully extended position, a tip 9 of each claw 6 locates adjacent the front panel 20 to securely retain the cover 7.

Mounting means, indicated generally by the reference numeral 60, is provided at a rear of the support frame 2 for mounting the support frame 2 on a tractor vehicle. Various mounting means are well known for mounting such devices at the front or at the rear of a tractor vehicle, for example, by a three point linkage, and need not be described in detail here. While the support frame 2 is preferably demountably engagable with a tractor vehicle, it could, if desired, be mounted fast on the tractor vehicle. The actuating rams 38, 53 for operating the cutter 4 and claws 6 are connected to the hydraulic system on the tractor vehicle in the usual way to power the rams 38, 53.

In use, and referring here in particular to Figs. 9 to 14, the bale cutter 1 is mounted on a tractor vehicle and connected to the hydraulic system usually provided on such a vehicle. For opening a wrapped bale 8 to dispense the fodder therein, the tines 22 are slid in under the bale 8 until the bale 8 rests against the front panel 20. As can be seen in the drawings, the bale 8 will nest into the concave front panel 20, the curvature of which corresponds to the curvature of the bale 8. The cutter operating rams 38 are operated to move the cutter head 26 downwardly into engagement with the bale 8, as shown in Fig. 10. As the cutter head 26 engages the bale 8, hydraulic pressure will increase in the rams 38 to advance the cutter head 26 through the bale 8. This increase in hydraulic pressure will trigger operation of the claw actuating ram 53 to rotate the swivel shafts 44, moving the claws 6 through the front panel 20, piercing through the cover 7 of the bale 8, as shown in Figs. 11 to 14. As the cutter head 26 moves downwardly through the bale 8, the cover 7 is opened and the fodder contained within the cover 7 can be discharged while, at the same time, the claws 6 retain the cover 7. Upon subsequent retraction of the claws 6 behind the front panel 20, the cover 7 is released from the claws 6 for disposal. It will be appreciated that the claws 6 will securely engage the cover 7 by penetrating the cover 7 and hooking onto the cover 7.

It will be noted that the set of claws 6 is spread out along the front of the frame 2 to ensure the cover 7 of the bale 8, even if the bale 8 is misshapen, is snagged and retained by the claws 6. Also, the claws 6 will penetrate frozen bales 8 if required in order to retain the cover 7 in these operating conditions also.

While the claw 6 is preferably curved, as illustrated in the drawings to securely hold the cover 7, it is envisaged that a substantially straight claw 6 might be used, if inserted into the cover 7 at a suitable angle to retain the cover 7 when the fodder is discharged.

While the bale cover retainer 5 of the invention is shown located between the bottom rail 10 and the top rail 11 of the support frame 2 it could be located at any other suitable location on the support frame 2 , for example at the top rail 11 with the claws 6 curving downwardly to engage the cover 7 of a bale 8 in use.

It is also envisaged that a bale cover retainer assembly of the invention could be provided for retrofit to existing conventional bale cutters.

The invention is not limited to the embodiments hereinbefore described which may be varied in both construction and detail within the scope of the appended claims.

## Claims

1. A bale cutter (1) comprising:
a support frame (2),
a bale support (3) on the frame (2),
a cutter head (26) movably mounted on the frame (2) for cutting through a bale mounted on the bale support (3), and
a bale cover retainer (5) mounted on the frame (2),
**characterised in that** the bale cover retainer (5) comprises at least one claw (6) mounted on the frame (2) with an associated actuator (53) which is operable to move the claw (6) between a retracted disengaged position on the frame (2), and an extended bale engaging position in which the claw (6) pierces the bale cover (7) and extends into the bale (8) in use.

2. The bale cutter (1) as claimed in claim 1, wherein the claw (6) is arcuate and is movable through an arc between the retracted disengaged position and the extended bale engaging position.

3. The bale cutter (1) as claimed in claim 1 or claim 2, wherein the claw (6) extends outwardly at a front side (20) of the frame (2) and a tip (9) of the claw (6) locates adjacent the front side (20) of the frame (2) when in a fully extended position.

4. The bale cutter (1) as claimed in any preceding claim, wherein the bale cover retainer (5) comprises a plurality of spaced-apart claws (6).

5. The bale cutter (1) as claimed in any preceding claim, wherein the or each claw (6) is mounted on a swivel shaft (44) which is rotatably mounted on the frame (2).

6. The bale cutter (1) as claimed in any preceding claim, wherein the actuator (53) is a double acting ram (53) mounted between the frame (2) and the swivel shaft (44) for rotation of the swivel shaft (44) on the frame (2).

7. The bale cutter (1) as claimed in claim 6, wherein a pair of swivel shafts (44) are rotatably mounted spaced-apart on the frame (2), each pivot shaft (44) having a number of claws (6) thereon, a lever arm (52) projecting radially outwardly at an inner end of each swivel shaft (44), the double acting ram (53) being mounted between a pivot connector (54) extended between outer ends (55) of the lever arms (52) and a pivot mount (56) on the frame (2).

8. The bale cutter (1) as claimed in any preceding claim, wherein the frame (2) has a concave front side (20) for reception of a bale (8) against said arcuate front side (20) for cutting the bale (8).

9. The bale cutter (1) as claimed in any preceding claim, wherein each claw (6) is movable through an associated opening (21) in the front side (20) when moving between the retracted disengaged position and the extended bale engaging position.

10. The bale cutter (1) as claimed in any preceding claim, wherein the cutter head (26) is mounted by a pair of spaced-apart support arms (27) on the frame (2), the cutter head (26) extending between outer ends of the support arms (27), inner ends of the support arms (27) being pivotally mounted on the frame (2), a double acting ram (38) mounted on the frame (2) at each support arm (27) and extending between the frame (2) and the support arm (27) above the pivot (32) at the inner end of the arm (27), said ram (38) being operable to push the arm (27) downwardly from a raised position for cutting through a bale (8) mounted on the bale support (3).

## Patentansprüche

1. Ballenspalter (1), der Folgendes umfasst:
einen Tragrahmen (2),
einen Ballenträger (3) an dem Rahmen (2),
einen beweglich an dem Rahmen (2) angebrachten Spalterkopf (26) zum Schneiden durch einen an dem Ballenträger (3) angebrachten Ballen, und
einen an dem Rahmen (2) angebrachten Ballenabdeckungshalter (5),
**dadurch gekennzeichnet, dass** der Ballenabdeckungshalter (5) mindestens eine an dem Rahmen (2) angebrachte Kralle (6) mit einer zugehörigen Betätigungsvorrichtung (53) umfasst, die betätigbar ist, um die Kralle (6) zwischen einer eingezogenen gelösten Stellung an dem Rahmen (2) und einer ausgefahrenen Balleneingriffsstellung, in der die Kralle (6) im Gebrauch die Ballenabdeckung (7) durchsticht und sich in den Ballen (8) erstreckt, zu bewegen.

2. Ballenspalter (1) nach Anspruch 1, wobei die Kralle (6) bogenförmig ist und entlang einem Bogen zwischen der eingezogenen gelösten Stellung und der ausgefahrenen Balleneingriffsstellung beweglich ist.

3. Ballenspalter (1) nach Anspruch 1 oder Anspruch 2, wobei sich die Kralle (6) an einer Vorderseite (20) des Rahmens (2) nach außen erstreckt und eine Spitze (9) der Kralle (6), wenn sie sich in einer vollständig ausgefahrenen Stellung befindet, benachbart der Vorderseite (20) des Rahmens (2) positioniert ist.

4. Ballenspalter (1) nach einem der vorangehenden Ansprüche, wobei der Ballenabdeckungshalter (5) mehrere voneinander beabstandete Krallen (6) umfasst.

5. Ballenspalter (1) nach einem der vorangehenden Ansprüche, wobei die oder jede Kralle (6) an einer Schwenkachse (44) angebracht ist, die drehbar an dem Rahmen (2) angebracht ist.

6. Ballenspalter (1) nach einem der vorangehenden Ansprüche, wobei es sich bei der Betätigungsvorrichtung (53) um einen zweifach wirkenden Kolben (53) handelt, der zur Drehung der Schwenkwelle (44) an dem Rahmen (2) zwischen dem Rahmen (2) und der Schwenkwelle (44) angebracht ist.

7. Ballenspalter (1) nach Anspruch 6, wobei ein Paar Schwenkwellen (44) drehbar voneinander beabstandet an dem Rahmen (2) angebracht sind, wobei die Schwenkwellen (44) jeweils eine Anzahl von Krallen (6) daran aufweisen, ein Hebelarm (52) an einem inneren Ende jeder Schwenkwelle (44) radial nach außen vorsteht und der zweifach wirkende Kolben (53) zwischen einem sich zwischen äußeren Enden (55) der Hebelarme (52) erstreckenden Schwenkverbinder (54) und einer Schwenkbefestigung (56) an dem Rahmen (2) angebracht ist.

8. Ballenspalter (1) nach einem der vorangehenden Ansprüche, wobei der Rahmen (2) eine konkave Vorderseite (20) zum Aufnehmen eines Ballens (8) an der bogenförmigen Vorderseite (20) zum Spalten des Ballens (8) aufweist

9. Ballenspalter (1) nach einem der vorangehenden Ansprüche, wobei die Krallen (6) jeweils durch eine zugehörige Öffnung (21) in der Vorderseite (20) beweglich sind, wenn sie sich zwischen der eingezogenen gelösten Stellung und der ausgefahrenen Balleneingriffsstellung bewegen.

10. Ballenspalter (1) nach einem der vorangehenden Ansprüche, wobei der Spalterkopf (26) durch ein Paar voneinander beabstandeter Tragarme (27) an dem Rahmen (2) befestigt wird, wobei sich der Spalterkopf (26) zwischen äußeren Enden der Tragarme (27) erstreckt, wobei innere Enden der Tragarme (27) schwenkbar an dem Rahmen (2) angebracht sind, ein zweifach wirkender Kolben (38) an jedem Tragarm (27) an dem Rahmen (2) angebracht ist und sich zwischen dem Rahmen (2) und dem Tragarm (27) über dem Schwenklager (32) am inneren Ende des Arms (27) erstreckt und der Kolben (38) betätigbar ist, um den Arm (27) von einer angehobenen Stellung zum Schneiden durch einen an dem Ballenträger (3) angebrachten Ballen (8) nach unten zu drücken.

## Revendications

1. Appareil de coupe de balle (1) comportant :
un cadre de support (2),
un support de balle (3) sur le cadre (2),
une tête de coupe (26) montée de manière mobile sur le cadre (2) permettant de couper au travers d'une balle montée sur le support de balle (3), et
un dispositif de retenue d'enveloppe de balle (5) monté sur le cadre (2), **caractérisé en ce que** le dispositif de retenue d'enveloppe de balle (5) comporte au moins une griffe (6) montée sur le cadre (2) avec un actionneur associé (53) qui sert à déplacer la griffe (6) entre une position découplée et rétractée sur le cadre (2), et une position déployée de mise en prise de balle dans laquelle la griffe (6) perce l'enveloppe de balle (7) et se déploie dans la balle (8) lors de l'utilisation.

2. Appareil de coupe de balle (1) selon la revendication 1, dans lequel la griffe (6) est arquée et est mobile le long d'un arc entre la position découplée et rétractée et la position déployée de mise en prise de balle.

3. Appareil de coupe de balle (1) selon la revendication 1 ou la revendication 2, dans lequel la griffe (6) se déploie vers l'extérieur au niveau d'un côté avant (20) du cadre (2) et une pointe (9) de la griffe (6) vient se positionner de manière adjacente par rapport au côté avant (20) du cadre (2) quand elle est dans une position entièrement déployée.

4. Appareil de coupe de balle (1) selon l'une quelconque des revendications précédentes, dans lequel le dispositif de retenue d'enveloppe de balle (5) comporte une pluralité de griffes espacées les unes des autres (6).

5. Appareil de coupe de balle (1) selon l'une quelconque des revendications précédentes, dans lequel la ou chaque griffe (6) est montée sur un arbre pivotant (44) qui est monté de manière rotative sur le cadre (2).

6. Appareil de coupe de balle (1) selon l'une quelconque des revendications précédentes, dans lequel l'actionneur (53) est un vérin à double effet (53) monté entre le cadre (2) et l'arbre pivotant (44) à des fins de rotation de l'arbre pivotant (44) sur le cadre (2).

7. Appareil de coupe de balle (1) selon la revendication 6, dans lequel une paire d'arbres pivotants (44) sont montés de manière rotative et de manière espacée l'un par rapport à l'autre sur le cadre (2), chaque arbre pivotant (44) ayant un certain nombre de griffes (6) sur celui-ci, un bras de levier (52) faisant saillie dans le sens radial vers l'extérieur au niveau d'une extrémité intérieure de chaque arbre pivotant (44), le vérin à double effet (53) étant monté entre un connecteur de pivot (54) déployé entre des extrémités extérieures (55) des bras de levier (52) et un support de pivot (56) sur le cadre (2).

8. Appareil de coupe de balle (1) selon l'une quelconque des revendications précédentes, dans lequel le cadre (2) a un côté avant concave (20) à des fins de réception d'une balle (8) contre ledit côté avant arqué (20) pour couper la balle (8).

9. Appareil de coupe de balle (1) selon l'une quelconque des revendications précédentes, dans lequel chaque griffe (6) est mobile au travers d'une ouverture associée (21) dans le côté avant (20) lors du déplacement entre la position découplée et rétractée et la position déployée de mise en prise de balle.

10. Appareil de coupe de balle (1) selon l'une quelconque des revendications précédentes, dans lequel la tête de coupe (26) est montée par une paire de bras de support espacés l'un par rapport à l'autre (27) sur le cadre (2), la tête de coupe (26) se déployant entre des extrémités extérieures des bras de support (27), des extrémités intérieures des bras de support (27) étant montées de manière pivotante sur le cadre (2), un vérin à double effet (38) étant monté sur le cadre (2) au niveau de chaque bras de support (27) et se déployant entre le cadre (2) et le bras de support (27) au-dessus du pivot (32) au niveau de l'extrémité intérieure du bras (27), ledit vérin (38) servant à pousser le bras (27) vers le bas depuis une position relevée pour couper au travers d'une balle (8) montée sur le support de balle (3).
